# EUROPEAN PATENT APPLICATION

(11) **EP 1 331 603 A1**
(43) Date of publication of application: **30.07.2003**
(21) Application number: 01976855.5
(22) Date of filing: 26.10.2001
(51) Int. Cl.: G06T 1/00, B41F 33/14, G01B 11/24, G01N 21/956

(54) **IMAGING METHOD AND IMAGING DEVICE, OBJECT TO BE IMAGED, PRINTING METHOD**

(30) Priority: 31.10.2000 JP 2000333118
(71) Applicant: SUNTORY LIMITED, Osaka-shi, Osaka 530-0004 (JP)
(72) Inventor: YAMAGISHI, Takahiro, c/o SUNTORY LIMITED, Osaka-shi, Osaka 530-0003 (JP); TAMURA, Shigeki, Shibukawa-shi, Gunma 377-0004 (JP)
(74) Representative: Petersen, Frank, Dipl.-Ing.
(86) International application number: JP0109457
(87) International publication number: WO02037417

(57) **Abstract**

In an imaging method including the steps of irradiating light from light emitting means (4) to a target object to be imaged (S) such as a cardboard box, including an identifier marking (3) at a second portion (d2) thereof printed on a first portion (d1) constituting an ornamental design (2) printed on a cardboard box side face (1A) and then receiving the reflected light therefrom by light receiving means (5) so as to image the object (S), the first portion (d1) and the second portion (d2) are provided with different reflection factors for the near-infrared range light from each other. The light emitted from the light emitting means (4) includes a near-infrared range light component and the light receiving means (5) receives the near-infrared range light component for the imaging. With these, even when the marking is printed on a background having a dark color, the marking can be detected accurately and reliably as being distinct from the background.

## Description

### TECHNICAL FIELD

The present invention relates to a method of and an apparatus for imaging a target object by irradiating light on the object by light emitting means and receiving the reflected light from the object by light receiving means. The invention relates also to a target object to be imaged and a method of printing an image such as a graphic, numerical or character image on the object suitable for the imaging therefrom. Generally, the invention relates to the imaging art which allows accurate and reliable discrimination of the target image from its background having a color identical or substantially similar to the target image.

### BACKGROUND ART

The imaging method or apparatus described above has been employed for instance in a manufacture line of various bottled or canned soft or hard drinks for inspecting whether an image such as an identifier marking of date of manufacture printed on a label attached to an outer surface of a cardboard box containing a plurality of bottles or on a label attached to each bottle is properly printed or not. According to a typical conventional inspecting method of this type, white light such as one from a fluorescent tube is irradiated on the printed face of the object. Then, its reflected light is received by a black-and-white CCD (charge-coupled device) camera and then the resultant image is subjected to an image processing by a processor to detect the printed identifier marking and this detected marking is compared with a predetermined reference marking stored in advance at the processor so as to determine whether the image or the marking is properly printed or not.

With the imaging method or apparatus described above, its operation can proceed easily and reliably as long as the target printed image such an identifier marking is printed on a simple background in white or pale color without any ornamental features, such as the raw outer material face of a cardboard box or a white portion of a label affixed to a container or bottle because the target image is printed generally in black or a much darker color which gives high contrast relative to the background. On the other hand, if the background has a darker color and/or some distinct ornamental pattern or the like, the contrast between the target printed image and the background is diminished to often make the distinction therebetween, i.e. the imaging operation, difficult or even impossible. Obviously, the smaller the contract between the background and the target image, the greater this difficulty.

For the reason described above, for reliable and accurate detection of the identifier marking, it has been necessary to print the background without ornamental features and in the white or pale color. This has imposed significant limitations to the designing of the object of imaging such as the outer face of the cardboard box or the label affixed to the container. In addition, in recent years, in the manufacture line of such products, the cardboard boxes or the containers are transported at a high speed. This further adds to the difficulity in accurate detection of the printed identifier marking especially when the outer face of the box or container is provided with ornamental design provided rather freely without consideration to the printed position of the identifier marking. For these reasons, there has been a continued demand for improved imaging method and apparatus which allow accurate detection of a printed target image such as an identifier marking even in a high-speed production line and which does not impose limits in the designing aspect.

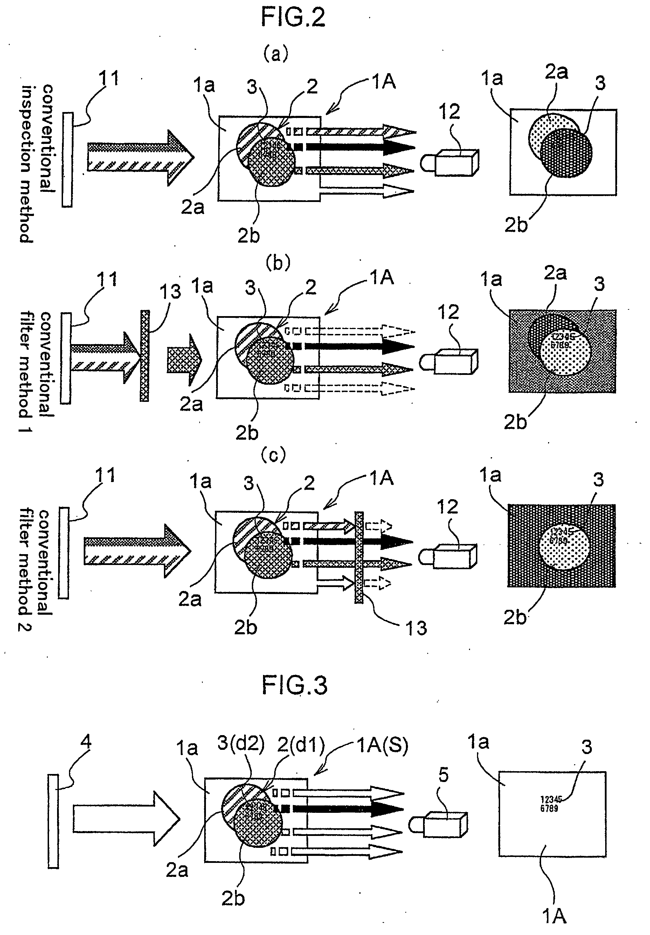

One conventional approach addressed to the above problem has been simply to increase the amount of light to be irradiated onto the target object represented by a cardboard box. This approach does not provide fundamental improvement of the situation. Another conceivable approach would be to provide a filter having the same color as the background in front of the CCD camera, so as to lighten or cancel out the color of the background for obtaining greater contrast relative to the target image printed thereon (see Fig. 2 (c)). With this latter method, however, the distinction between the background and the image will remain difficult when the background has a dark color. Moreover, this technique using a color filter cannot cope with a background having multiple of colors.

In view of the above-described state of the art, a primary object of the present invention is to provide an imaging method and apparatus as well as a target object to be imaged and a printing method which all allow accurate and easy detection or distinction of the target image without much limitations in such essential designing aspects as the color, position, size and area of the image and/or background.

### DISCLOSURE OF THE INVENTION

For accomplishing the above-noted object, through intensive research efforts, the present inventors have devised a method of printing an image on a target object to be imaged with an ink having a different reflection factor for near-infrared light, non-visible range light than that of a background of the image or object or printing the object with a plurality of kinds of ink having reflection factors for the near-infrared range light different from each other. Further, the inventors developed the target object to be imaged for printing by this printing method as well as an imaging method and apparatus for imaging the object by irradiating the near-infrared light to the object and receiving the reflected light therefrom, thus completing the present invention.

### [METHOD AND CONSTRUCTION]

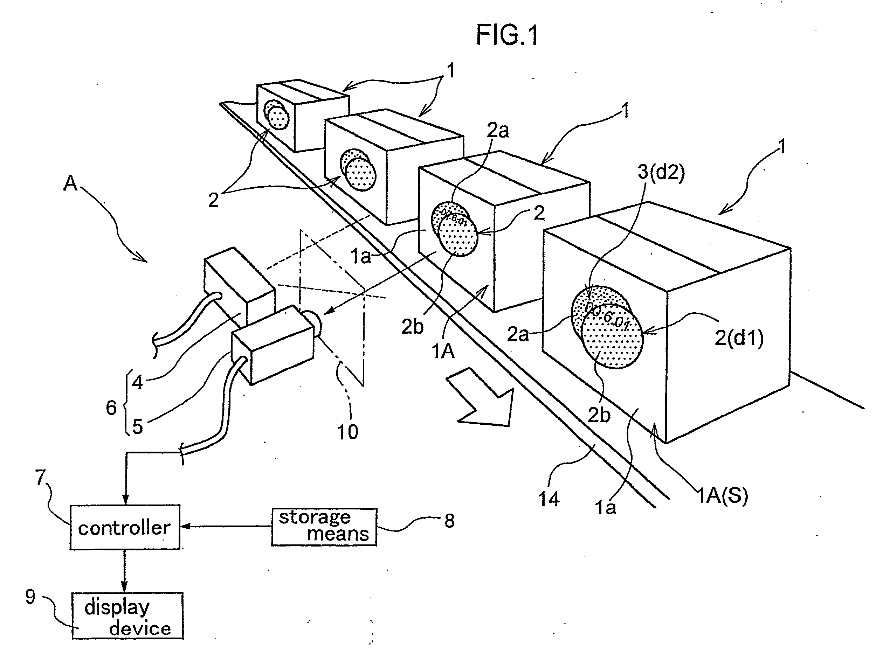

According to an imaging method relating to claim 1, as shown in Figs. 1 and 3 for example, the method comprises the steps of: irradiating light to an imaging target object S by light emitting means 4 and receiving the reflected light from the object by light receiving means 5 and imaging the object S about the reflected light, wherein the object S includes at least two portions d1, d2 having different reflection factors for a near-infrared range light from each other and the light emitting means 4 irradiates the light which includes the near-infrared range light component and the light receiving means 5 receives the near-infrared range light component.

According to a method relating to claim 2, as shown in Figs. 1 and 3 for example, in the method of claim 1, the light receiving means 5 comprises a charge-coupled device.

According to a method relating to claim 3, as shown in Fig. 1 for example, in the method of claim 1, the light receiving means 5 receives light whose visible light component has been eliminated by a visible light cut filter 10.

According to a method relating to claim 4, as shown in Fig. 1 for example, in the method of claim 1, the light emitting means 4 irradiates, to the object, light whose visible light component has been eliminated by a visible light cut filter 10.

According to a method relating to claim 5, as shown in Figs. 1 and 3 for example, in the method of any one of claims 1-4, the one d2 of the two portions having different reflection factors for a near-infrared range light from each other is an identifier marking 3 printed on the object S.

According to a method relating to claim 6, as shown in Figs. 1 and 3 for example, in the method of any one of claims 1-4, the object S includes a raw material portion and a portion printed with an ink having a different reflection factor for the near-infrared range light from the raw material portion 1a or includes the two portions d1 and d2 printed with at least two kinds of ink having different reflection factors for the near-infrared range light from each other.

According to an imaging apparatus relating to claim 7, as shown in Figs. 1 and 3 for example, the apparatus for imaging a target object S by irradiating light on the object S by light emitting means 4 and receiving the reflected light from the object S by light receiving means 5, wherein the light emitting means 4 irradiates light including the near-infrared range light component on the object S including at least two portions d1, d2 having different reflection factors for a near-infrared range light from each other and the light receiving means 5 receives the near-infrared range light component.

According to an apparatus relating to claim 8, as shown in Figs. 1 and 3 for example, in the apparatus of claim 7, the light receiving means 5 comprises a charge-coupled device.

According to an apparatus relating to claim 9, as shown in Fig. 1 for example, in the apparatus of claim 7, the apparatus further comprises a visible light cut filter 10 for eliminating visible light component from the light to be received by the light receiving means 5.

According to an apparatus relating to claim 10, as shown in Fig. 1 for example, in the apparatus of claim 7, the apparatus further comprises a visible light cut filter 10 for eliminating visible light component from the light to be irradiated by the light emitting means 4.

According to an apparatus relating to claim 11, as shown in Figs. 1 and 3 for example, in the apparatus of any one of claims 7-10, the light emitting means 4 emits light including near-infrared light component to the object including an identifier marking 3 printed thereon as the one d2 of the two portions having different reflection factors for a near-infrared range light from each other.

According to an apparatus relating to claim 12, as shown in Figs. 1 and 3 for example, in the apparatus of any one of claims 7-10, the object S includes a raw material portion and a portion printed with an ink having a different reflection factor for the near-infrared range light from the raw material portion 1a or includes the two portions d1 and d2 printed with at least two kinds of ink having different reflection factors for the near-infrared range light from each other.

According to a target object to be imaged relating to claim 13, as shown in Figs. 1, 3 and 11, the object is adapted for use with an imaging apparatus 6 including light emitting means 4 for irradiating light and light receiving means 5 for receiving the irradiated light; wherein the object includes a raw material portion 1a and a portion 2b printed with an ink having a different reflection factor for the near-infrared range light from the raw material portion 1a or includes two portions d1 and d2 printed with at least two kinds of ink having different reflection factors for the near-infrared range light from each other.

According to a printing method relating to claim 14, as shown in Figs. 1, 3 and 11, the method comprises the step of printing a portion 1b of an imaging target object S for printing with an ink having a different reflection factor for a near-infrared range light than a raw material portion 1a of the object S or printing two portions 1a and 1b of the object S with at least two kinds of ink having different reflection factors for the near-infrared range light from each other.

Incidentally, although reference marks and numerals are provided in the above description in order to facilitate reference to the accompanying drawings, it is understood that the provision of these marks and numerals is not to limit the scope of the invention to the constructions shown in the drawings.

### [Functions/Effects]

With the method according to claim 1, although more detailed explanation will be given in a section of embodiments, the target object to be imaged includes at least two portions having different near-infrared range light reflection factors from each other. Then, when this object is irradiated with the near-infrared light, the light receiving means can detect the reflection factor difference between the two portions, so that these two portions can be detected separately from each other owning to the distinct contrast in the infrared light range provided therebetween.

More particularly, if the two portions are referred to as a first portion and a second portion, recognition of the identifier marking with a distinct contrast therebetween would be made possible also by varying reflection factors of these portions in the visible light range. With such method, however, the recognition becomes difficult if both of the first and second portions have light colors or dark colors or one of them has a dark color. In contrast, with the method of the present invention utilizing a light having a near-infrared range light component invisible by human eyes, the target object to be imaged may be printed just like the conventionally printed object when seen by human eyes, that is, in the visible range. Whereas, the identifier marking (such as the date of manufacture, the date recommended by the manufacturer by which the product is to be consumed, (referred to as "best-consumed-by date" hereinafter) etc.) may be recognized in the near-infrared range light and the recognition of the identifier marking by imaging apparatus or method may be carried out reliably even in the case of at a high-speed transport in the manufacture line.

As a result, by providing the target object to be imaged with two portions, of the first portion such as the background and the second portion such as the identifier marking which portions have mutually different reflection factors for the near-infrared range light, the image of either one of these portions may be picked up distinctly from the other, even when these first and second portions are formed as normal visible portions and regardless of the color tone relationship therebetween.

With the method according to claim 2, since a commonly available CCD camera may be used as the light receiving means, the above-described function/effect can be obtained easily and economically.

With the method according to claim 3, provided the two portions are an identifier marking and background, the following function and effect can be achieved. When the light receiving means received light components in both the visible range light and the near-infrared range light, imaging result in the visible range light where the distinction between the identifier marking and the background is difficult and imaging result in the near-infrared range light where the distinction between the identifier marking and the background is easy would be obtained in a mixed state. In such case, some additional processing means would be needed in the image processing system for selectively obtaining the imaging result in the near-infrared range light alone, by e.g. providing a filter for canceling the imaging result in the visible range light.

In contrast, if the light receiving means is adapted for receiving only the near-infrared light component of the light whose visible range light component has been eliminated already, the light receiving means receives only the near-infrared light component even when the irradiated light form the light irradiating means contains visible range light component also. Therefore, the image of the marking may be picked up reliably and easily, without having to provide such additional image processing or separating means as described above. Further, in case such additional image processing means were incorporated within the image processing system for eliminating the visible range light component, this could interfere with the image processing circuit of the system for processing the imaging result for the near-infrared light component. On the other hand, such disadvantageous interference does not occur in the case of such mechanical means as the visible light cut filter. As a result, the image recognition precision will be improved and also additional image processing step (or means) for eliminating the imaging result for the visible range light will become unnecessary. Consequently, the entire image processing control scheme may be simplified.

With the method according to claim 4, provided again the two portions are an identifier marking and background, the following function and effect can be achieved. When the light emitting means emitted light components in both the visible range and the near-infrared range light, imaging result in the visible range light where the distinction between the identifier marking and the background is difficult and imaging result in the near-infrared range light where the distinction between the identifier marking and the background is easy would be obtained in a mixed state. In such case, some additional processing means would be needed in the image processing system for selectively obtaining the imaging result in the near-infrared range light alone, by e.g. providing a filter for canceling the imaging result in the visible range light.

In contrast, if the light emitting means is adapted for emitting only the near-infrared light component of the light whose visible range light component has been eliminated already, the light receiving means receives only the near-infrared light component even when the irradiated light form the light irradiating means contains visible range light component. Therefore, the image of the marking may be picked up reliably and easily, without having to provide such additional image processing means as described above. Further, in case of such additional image processing means were included in the image processing system for eliminating the visible range light component, this could interfere with the image processing circuit of the system for processing the imaging result for the near-infrared range light component. On the other hand, such interference does not occur in the case of such mechanical means as the visible light cut filter. As a result, the image recognition precision will be improved and also additional image processing step (or means) for eliminating the imaging result for the visible range light will become unnecessary. Consequently, the entire image processing control scheme may be simplified.

With the method according to claim 5, in case an identifier marking such as the best-consumed-by date is printed on a material surface of the target object to be imaged such as on an outer surface of a cardboard box, a bottle, a can or the like of a drink product or in case such identifier marking is printed on various ornamental designs, by forming the material surface and the identifier marking or the design and the marking as the two portions constructed above, the identifier marking can be recognized reliably and precisely.

As a result, this imaging method will be useful for checking or inspection in a manufacture line of products for instance.

With the method according to claim 6, by varying the reflection factors for the near-infrared range light between the ink used for the printed portion and the material of the target object to be imaged, the distinction between the object material surface and its printed portion is made possible. Alternatively, the inks used for the visibly different printed portions may be varied from each other in their reflection factors for the near-infrared range light. For instance, for such a target object to be imaged with a marking which cannot be readily recognized by the conventional method, e.g. a target object having an identifier marking on an ornamental design printed in a dark color, clear distinction between these printed portions, i.e. the marking and the design is still possible by selecting in advance the inks used for the printing of these portions with consideration to their reflection factors for the near-infrared range light.

With the apparatus according to claim 7, substantially same function and effect as those by the method according to claim 1 can be obtained. And, with the apparatus according to claim 8, substantially same function and effect as those by the method according to claim 2 can be obtained. With the apparatus according to claim 9, substantially same function and effect as those by the method according to claim 3 can be obtained. With the apparatus according to claim 10, substantially same function and effect as those by the method according to claim 4 can be obtained. With the apparatus according to claim 11, substantially same function and effect as those by the method according to claim 5 can be obtained. And, with the apparatus according to claim 12, substantially same function and effect as those by the method according to claim 6 can be obtained.

With the target object to be imaged according to claim 13, by varying the reflection factors for the near-infrared range light between the ink used for the printed portion and the material of the object, the distinction between the object material surface and its printed portion is made possible. Alternatively, the inks used for the visibly different printed portions may be varied from each other in their reflection factors for the near-infrared range light. By selecting in advance the inks used for the printing of these portions with consideration to their reflection factors for the near-infrared range light, clear distinction between the printed portions is made possible.

With the printing method according to claim 14, by varying the reflection factors for the near-infrared range light between the ink used for the printed portion and the material of the target object to be imaged, the distinction between the object material surface and its printed portion is made possible. Alternatively, the inks used for the visibly different printed portions may be varied from each other in their reflection factors for the near-infrared range light. By selecting in advance the inks used for the printing of these portions with consideration to their reflection factors for the near-infrared range light, clear distinction between the printed portions is made possible.

### BRIEF DESCRIPTION OF THE DRAWINGS

Fig. 1 is a perspective view illustrating an inspecting step in a manufacture line,
Fig. 2 is a view illustrating a conventional imaging method,
Fig. 3 is a view illustrating an imaging method according to the present invention,
Fig. 4 is a graph showing reflection factor characteristics of blue, green and red dyes,
Fig. 5 is a graph showing reflection factor characteristics of dark grey,
Fig. 6 is a graph showing reflection factor characteristics of purple,
Fig. 7 is a graph showing reflection factor characteristics of red,
Fig. 8 is a graph showing reflection factor characteristics of black using carbon black,
Fig. 9 is a graph showing reflection factor characteristics of white,
Fig. 10 is a graph showing reflection factor characteristics of cyanine green, and
Fig. 11 is a perspective view showing another kind of a target object to be imaged.

### BEST MODE OF EMBODYING THE INVENTION

Embodiments of the present invention will be described next in details with reference to the accompanying drawings.

An imaging method and an imaging apparatus relating to the present invention are for use in inspecting whether an identifier marking such as a date of manufacture is printed properly on a side face of a cardboard box in a manufacture line for packing a predetermined number of products such as bottled soft or hard drinks therein one after another into the box. As shown in Fig. 1, for this inspecting process in the manufacture line for packing, there is provided a conveyer 14 for continuously conveying cardboard boxes (an example of container) 1 each containing a predetermined number of drink products therein in a sealed state.

On a side face 1A of each cardboard box 1, an ornamental design (an example of a "first portion d1") 2 is printed in advance by an unillustrated printer and also an identifier marking (an example of a "second portion d2") 3 such as the date of manufacture is printed in advance by an unillustrated stamper on the ornamental design 2 after the predetermined number of drink products were packed in the box. The conveyer 14 coveys these cardboard boxes 1 each bearing the identifier marking 3 on the side face thereof and having its top face closed. Then, on the lateral side of this conveyer 14, there is installed an inspecting apparatus A for inspecting whether the printed identifier marking 3 of the date of manufacture is printed properly on each both or not.

The inspecting apparatus A includes an imaging apparatus 6 for irradiating light from a light emitting LED (an example of "light emitting means") 4 to the side face 1A (an example of "target object to be imaged" and "target object to be imaged for printing") of the cardboard box 1 and receiving the light reflected therefrom by a CCD camera (an example of "light receiving means") 5 for imaging the box side face 1A. The apparatus further includes a controller 7, a storage means 8 for storing in advance a predetermined correct date of manufacture as a reference, and a display device 9 for displaying matching or non-matching between the date of manufacture of the identifier marking 3 detected by the imaging apparatus 6 and the reference date of manufacture stored in the storage means 8.

The light emitting LED 4 is adapted for emitting light having a near-infrared light component e.g. in the range of 700 nm to 900 nm as a near-infrared light. Also, the CCD camera 5 is adapted for receiving the near-infrared light. Advantageously, as shown in Fig. 1, in front of the CCD camera 5, there is provided a visible light cut filter 10 for cutting visible light component so as to allow only the near-infrared light component contained in the reflected light to reach the CCD camera 5, whereby subsequent image processing operation can omit processing of visible light component data contained in the imaging result.

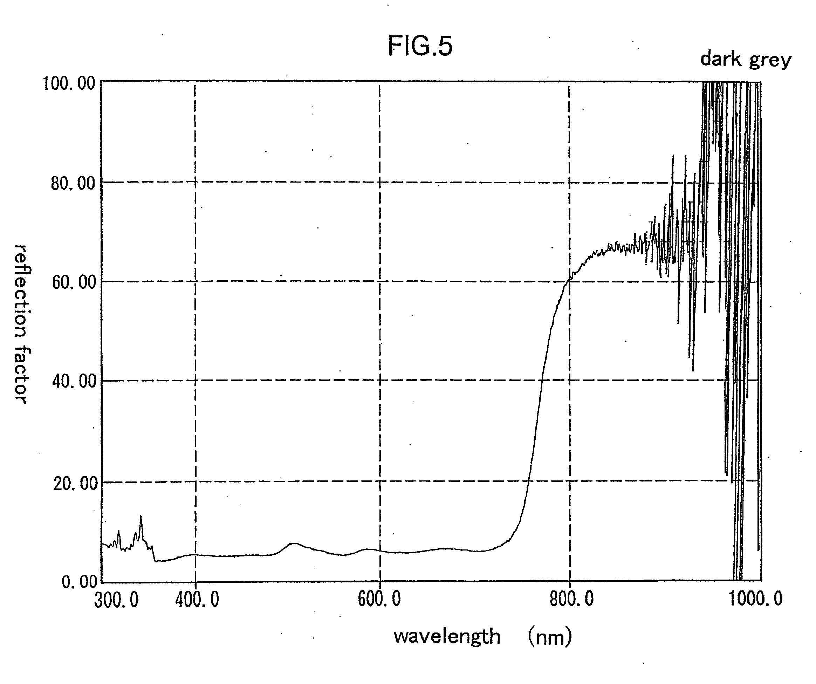

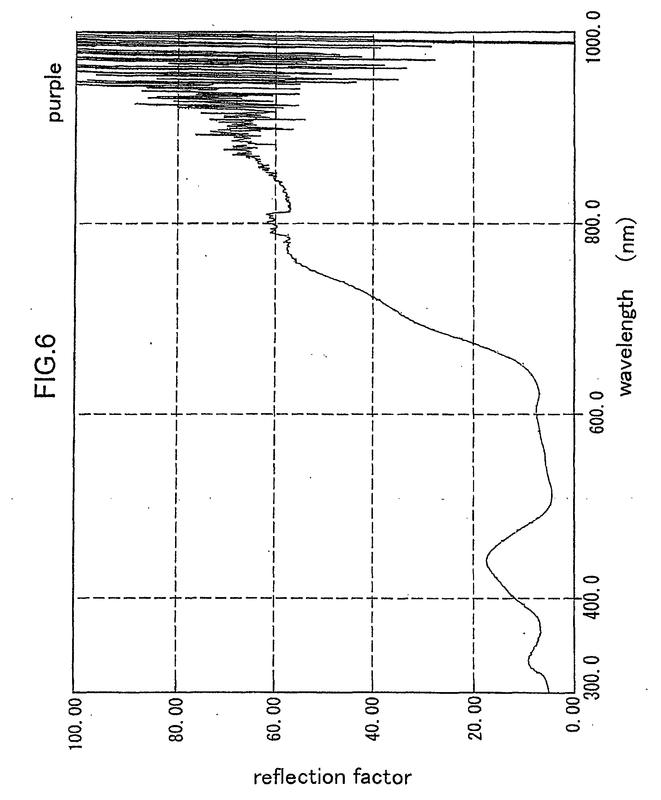

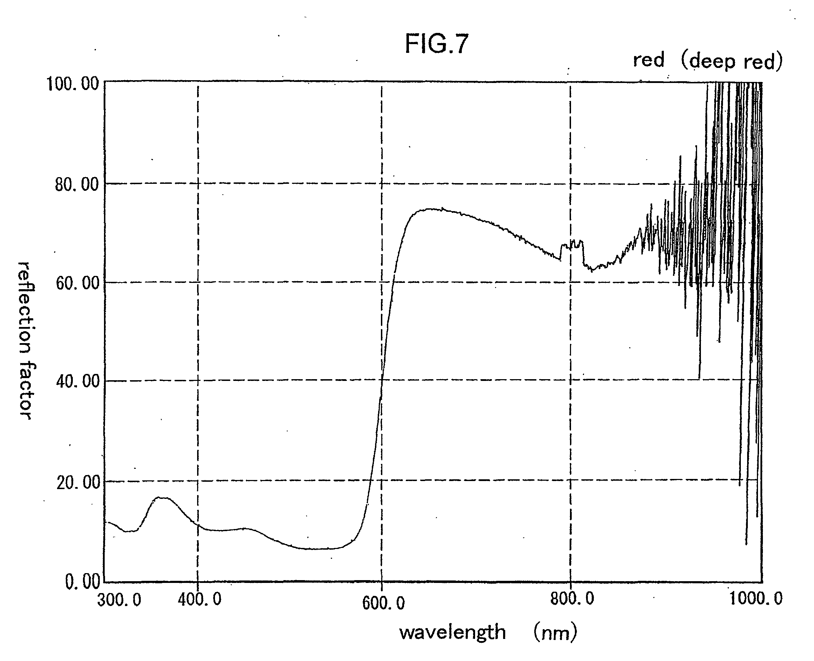

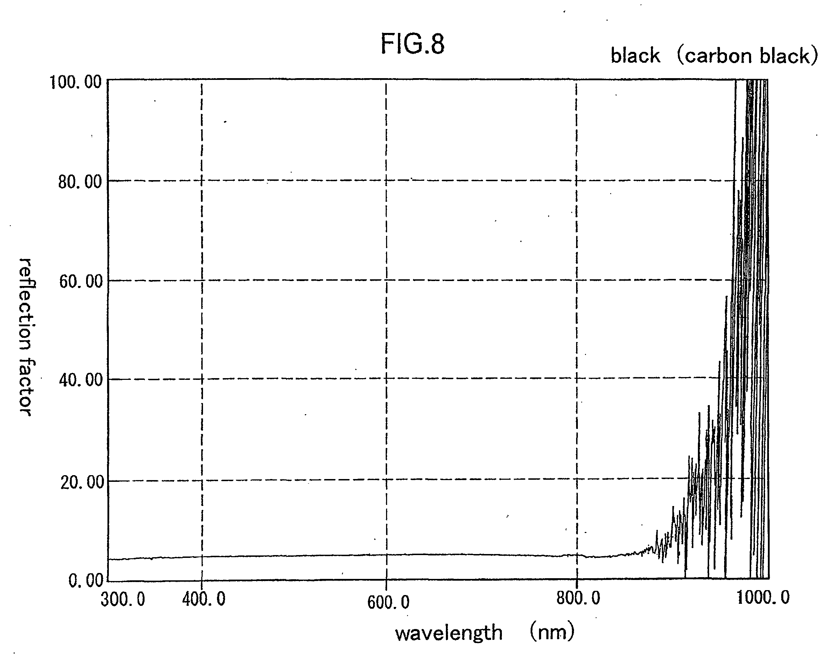

The ornamental design 2 printed on the box side face 1A includes a circular portion 2b printed with an ink having a dark color, e.g. purple (or dark grey) and a crescent portion 2a printed with a red ink with a part thereof cut away by the presence of the circular portion adjacent thereto. And, on this ornamental design 2, the identifier making 3 of the date of manufacture is printed as being superposed thereon. The purple (or dark grey) ink and the red ink used for the ornamental design 2 are conventional inks which absorb only the visible range light components. For reference, reflection factors of these inks for these wave lengths are illustrated by characteristics graphs in Figs. 5 through 7. On the other hand, the identifier marking 3 is printed with an ink containing a dye of carbon black which absorbs both the visible light components and the near-infrared light component. Its characteristics graph is shown in Fig. 8.

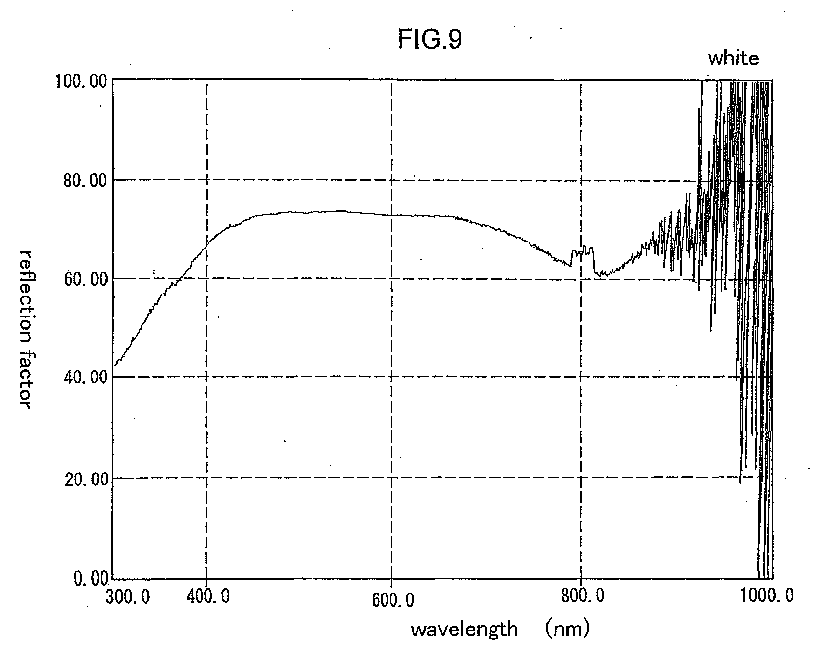

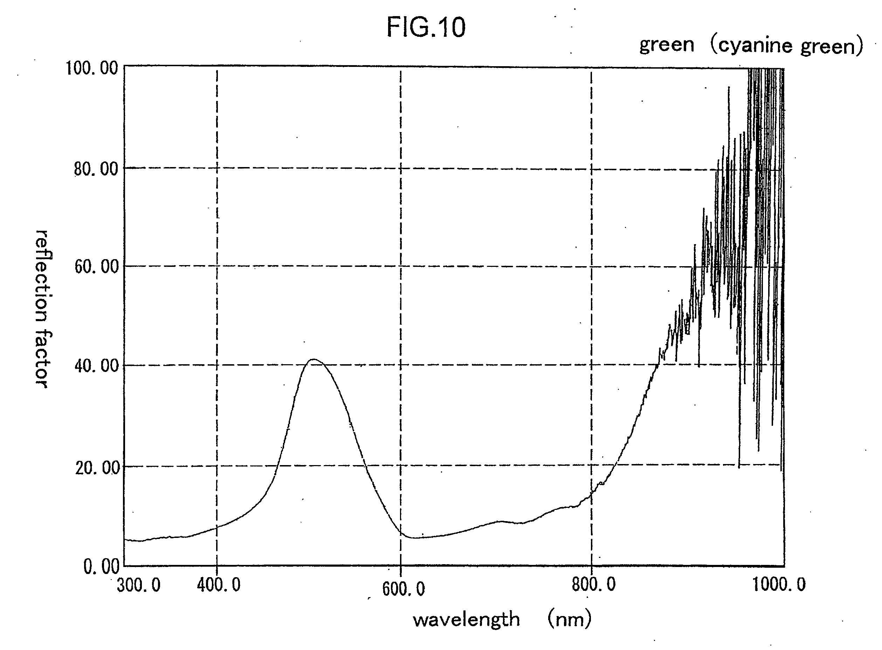

The conventional ink dye typically employed for printing presents its color by absorbing the other colors in the visible range light than the color of its own. With such dye, as illustrated by the graphs of Figs. 5 through 7, it reflects the light in the infrared light range having a wavelength of 800 nm or greater (e.g. 800 nm to 900 nm), just like the white color (see its graph in Fig. 9). In contrast, some dyes such as carbon black, cyanine green etc., have low reflection factors for the near-infrared light range (the characteristics graph of carbon black is shown in Fig. 8 and the characteristics graph of cyanine green is shown in Fig. 10). Then, as the ink for printing the identifier marking 3, an ink containing a dye having a low reflection factor for the near-infrared light range is employed. And, as the ink for printing the ornamental design 2 of the side face 1A, an ink containing a dye having a high reflection factor for the near-infrared range light is employed. Further, a near-infrared light is employed for illumination of the imaging apparatus 6. These techniques were invented and completed by the present inventors based on the discovery that there exist characteristics differences among the dyes regarding their reflection factors for the near-infrared range light and these characteristics differences can be advantageously utilized for image discrimination.

With the above-described arrangements, as shown in Fig. 3, when the light containing the near-infrared range light component is irradiated on the side face 1A of the cardboard box 1, the other portions of the side face 1A than the identifier marking 3, that is, the background (raw material surface) 1a and the ornamental design 2 both reflect equally well the near-infrared range light component, so that there is produced substantially no difference in the reflected light amounts between the ornamental design 2 and the background 1a. Whereas, since the identifier marking 3 has a low reflection factor for the near-infrared range light component, there is produced a significant difference in the reflected light amount relative to the ornamental design 2 (and the background 1a), that is, a great difference in the reflection factor for the near-infrared range light.

Therefore, there is produced a significant contrast difference between the identifier marking 3 and the remaining portions as shown, so that the CCD camera 5 will recognize the identifier marking 3 as a black image and also recognize the other portions as whitish images. As a result, the identifier marking 3 may be detected easily and reliably.

Conversely, it is also possible to adapt the identifier marking 3 portion to reflect the near-infrared range light component and also to adapt the other portions (that is, the ornamental design 2 and the background 1a) to have lower reflection factors for the near-infrared range light, so that the camera will recognize as the identifier marking 3 as a whitish image. In this case too, substantially same effect, that is, the easy and reliable recognition of the identifier marking 3, can be achieved. In these manners, it has now become possible to image the identifier marking 3 more reliably and accurately, which imaging was difficult with the conventional method using visible light irradiation.

Therefore, since the image picked up by the imaging apparatus 6 allows clear and distinct recognition of the identifier marking 3, the subsequent image processing operation of comparing it with the reference manufacture date stored in advance in the storage means 8 may be carried out easily and reliably by the controller 7. Then, if there is found non-matching therebetween, the cardboard box bearing this marking is determined as a "defective", so that any appropriate operation subsequent thereto may be carried out. For instance, the defective will automatically be picked up away from the conveyer 14 or the discovery of the defective will be notified by mean of an alarm device.

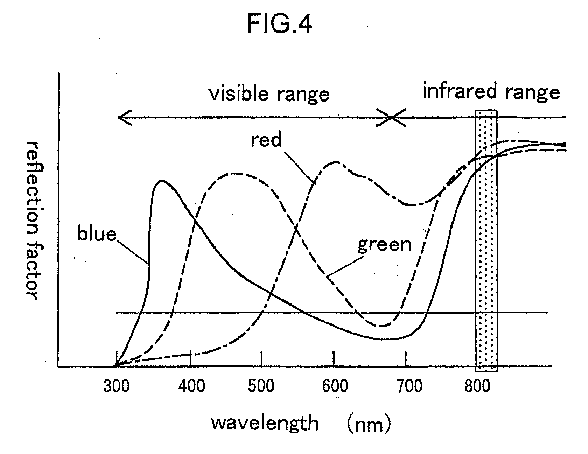

Incidentally, the dyes which reflect the near-infrared range light components are commonly available in many colors. Then, by appropriately mixing some of them, it becomes possible to express substantially all colors including the three primary colors (see Fig. 4) in the visible range light. And, the near-infrared light having the wavelength of about 800 nm (e.g. 700 nm to 1000 nm) can be picked up with sufficient sensitivity by a standard CCD camera commonly available on the market.

As reference, an imaging condition of the identifier marking 3 by the conventional method using the visible light irradiation will be described with reference to Fig. 2. First, as shown in Fig. 2(a), a visible light emitting device 11 emitting only the visible light components irradiates the visible light to the side face 1A bearing the ornamental design 2 including the circular portion 2b having a relatively dark purple color and the crescent portion 2a having red color and the identifier marking 3 of e.g. the date of manufacture and the black-and-white CCD camera 12 is employed for receiving the light reflected from the face (this method will be referred to as the "conventional inspection method"). In this case, the visible light is well reflected by the background 1a portion which comprises the raw material cardboard face, but not reflected will by the ornamental design 2 or the identifier marking 3. So that, there is produced substantially no reflected light amount difference (i.e. the contrast difference) between the ornamental design 2 and the identifier marking 3. As a result, accurate recognition of the identifier marking 3 is difficult.

Next, as shown in Fig. 2 (b), in the construction of Fig. 2 (a) described above, additionally, a purple filter 13 is disposed in front of the visible light source 11 so as to irradiate a purple-colored visible light to the box side face 1A (this method will be referred to as "filter method 1" hereinafter). In this case, it is possible to increase the reflected light amount (i.e. to reduce the absorption factor) of only the circular portion 2b. Therefore, regarding the part of the identifier marking 3 located within this circular portion 2b, the reflected light amount difference (contrast difference) may be improved for facilitating the recognition of the identifier marking 3 at this part. However, the other part of the identifier marking 3 located within the crescent portion 2a cannot be recognized easily. Hence, this method cannot achieve accurate and reliable recognition of the entire identifier marking 3. In addition, this method suffers other disadvantages of requiring preparation of a filter of a different color each time the color of the design 2 is changed and requiring troublesome operation of replacing the filters.

Further, as shown in Fig. 2 (c), a still another method is conceivable. In this case, a purple filter 13 is disposed in front of the CCD camera 12, so that the reflected light from the box side face 1A is changed into a purple light which is then received by the CCD camera 12 (this method will be referred to as "filter method 2" hereinafter). With this method too, the reflected light amount may be increased for the circular portion 2b, so that the recognition of the part of the identifier marking 3 located within this circular portion 2b may be facilitated. However, the other part of the identifier marking 3 located within the crescent portion 2a cannot be recognized easily. Hence, this method cannot achieve accurate and reliable recognition of the entire identifier marking 3, either.

In addition, this method also suffers other disadvantages of requiring preparation of a filter of a different color each time the color of the design 2 is changed and requiring troublesome operation of replacing the filters.

### [OTHER EMBODIMENTS]

The light emitting means 4 may be modified to emit only the near-infrared light component by using e.g. a near-infrared light emitting element. Or, this light emitting means 4 may comprise a combination of a light emitter such as an incandescent lamp, a fluorescent lamp, a stroboscopic lamp, or a halogen lamp all of which emit light over a wide wavelength range and a visible light cut filter disposed in front of this light emitter, so that only the near-infrared range components of the light from the emitter will be irradiated. Conversely, the light receiving means 5 may be adapted for receiving only the near-infrared range light component.

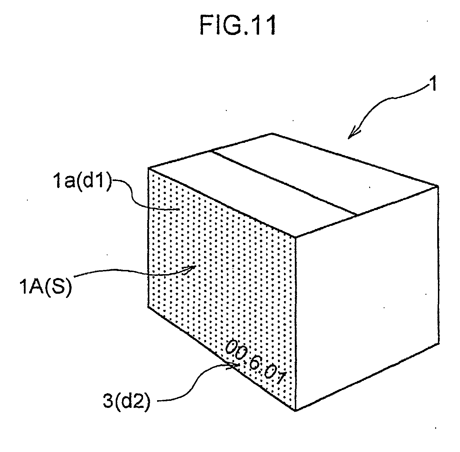

As shown in Fig. 11, the entire side face 1A of the cardboard box 1 may be printed in green, yellow or the like as the background 1a and on this monochromatic background 1a, the identifier marking 3 of the best-consumed-by date may be printed. In this case, the background 1a constitutes the first portion d1 and the date or marking 3 constitutes the second portion d2, respectively. Further, the target object to be imaged S may include three or more portions having mutually different reflection factors for the near-infrared range light, such as the raw material portion, an ornamental design printed on the material portion and an identifier marking printed on the ornamental design.

That is to say, according to the essential concept of the present invention, the light from the light emitting means 4 is irradiated to the target object to be imaged S having a first portion d1 as the background and a second portion d2 as the identifier marking and the light receiving means 5 receives the reflected light therefrom to pick up the image of the object S. In this, the first portion d1 and the second portion d2 are adapted to have different reflection factors for the near-infrared range light component from each other, so as to obtain a greater contrast between the first portion d1 and the second portion d2, whereby the recognition thereof may be carried out easily, speedily and reliably.

The invention may be embodied in any other way than the disclosed embodiments without departing from the scope thereof defined in the appended claims.

## Claims

1. An imaging method comprising the steps of: irradiating light to a target object to be imaged by light emitting means and receiving the reflected light from the object by light receiving means and imaging the object about the reflected light, wherein said object includes at least two portions having different reflection factors for a near-infrared range light from each other and wherein the light emitting means irradiates the light which includes the near-infrared range light component and the light receiving means receives the near-infrared range light component.

2. The method according to claim 1, wherein the light receiving means comprises a charge-coupled device.

3. The method according to claim 1, wherein the light receiving means receives light whose visible light component has been eliminated by a visible light cut filter.

4. The method according to claim 1, wherein the light emitting means irradiates, to the object, light whose visible light component has been eliminated by a visible light cut filter.

5. The method according to any one of claims 1-4, wherein the one of the two portions having different reflection factors for a near-infrared range light from each other is an identifier marking printed on the object.

6. The method according to any one of claims 1-4, wherein the object includes a raw material portion and a portion printed with an ink having a different reflection factor for the near-infrared range light from the raw material portion or includes the two portions printed with at least two kinds of ink having different reflection factors for the near-infrared range light from each other.

7. An imaging apparatus for imaging a target object by irradiating light on the object by light emitting means and receiving the reflected light from the object by light receiving means, wherein the light emitting means irradiates light including the near-infrared range light component on the object including at least two portions having different reflection factors for a near-infrared range light from each other and the light receiving means receives the near-infrared range light component.

8. The apparatus according to claim 7, wherein the light receiving means comprises a charge-coupled device.

9. The apparatus according to claim 7, further comprising a visible light cut filter for eliminating visible light component from the light to be received by the light receiving means.

10. The apparatus according to claim 7, further comprising a visible light cut filter for eliminating visible light component from the light to be irradiated by the light emitting means.

11. The apparatus according to any one of claims 7-10, wherein the light emitting means emits light including near-infrared light component to the object including an identifier marking printed thereon as the one of the two portions having different reflection factors for a near-infrared range light from each other.

12. The apparatus according to any one of claims 7-10, wherein the object includes a raw material portion and a portion printed with an ink having a different reflection factor for the near-infrared range light from the raw material portion or includes the two portions printed with at least two kinds of ink having different reflection factors for the near-infrared range light from each other.

13. A target object to be imaged for use with an imaging apparatus including light emitting means for irradiating light and light receiving means for receiving the irradiated light; wherein the object includes a raw material portion and a portion printed with an ink having a different reflection factor for the near-infrared range light from the raw material portion or includes two portions printed with at least two kinds of ink having different reflection factors for the near-infrared range light from each other.

14. A printing method comprising the step of printing a portion of an image pickup target object for printing with an ink having a different reflection factor for a near-infrared range light than a raw material portion of the object or printing two portions of the object with at least two kinds of ink having different reflection factors for the near-infrared range light from each other.
